# EUROPÄISCHE PATENTSCHRIFT

(11) **EP 0 944 682 B1**
(45) Veröffentlichungstag und Bekanntmachung des Hinweises auf die Patenterteilung: **27.03.2002**
(21) Anmeldenummer: 97954739.5
(22) Anmeldetag: 12.12.1997
(51) Int. Cl.: C09D 201/08, C08G 18/42, C08G 18/62

(54) **BINDEMITTELZUSAMMENSETZUNG, DIESE ENTHALTENDE ÜBERZUGSMITTEL, DEREN HERSTELLUNG UND VERWENDUNG**
BONDING AGENT COMPOSITION, COATING AGENTS CONTAINING THEM, THEIR PRODUCTION AND USE
COMPOSITIONS DE LIANT, AGENTS DE REVETEMENT RENFERMANT CELLES-CI, LEUR PRODUCTION ET LEUR UTILISATION

(30) Priorität: 14.12.1996 DE 1965214
(43) Veröffentlichungstag der Anmeldung: 29.09.1999
(73) Patentinhaber: E.I. DU PONT DE NEMOURS AND COMPANY, Wilmington Delaware 19898 (US)
(72) Erfinder: DUECOFFRE, Volker, D-42119 Wuppertal (DE); SCHUBERT, Walter, D-42349 Wuppertal (DE)
(74) Vertreter: Gille Hrabal Struck Neidlein Prop Roos
(86) Internationale Anmeldenummer: EP9706979
(87) Internationale Veröffentlichungsnummer: WO9827176

(56) Entgegenhaltungen:
- DE-A- 1 520 688
- DE-A- 2 065 770
- DE-A- 2 528 377
- FR-A- 2 198 969
- US-A- 4 555 535

## Beschreibung

Die Erfindung betrifft Bindemittelzusammensetzungen mit sehr hohem Verarbeitungsfestkörper, die zur Herstellung von Überzugsmitteln geeignet sind, die bei erhöhter Temperatur eingebrannt werden und insbesondere zur Herstellung von Mehrschichtlackierungen, beispielsweise auf dem Kraftfahrzeugsektor, geeignet sind.

Aus der DE-A-30 22 996 ist ein Einbrennlack bekannt, bei dem carboxylgruppenhaltige Polymere, wie z.B. Acrylate auf Basis Acrylsäure oder Methacrylsäure und glycidylgruppenhaltiger Acrylate zu einer härtbaren Zusammensetzung vermischt sind.

In der WO 84/00771 ist ein Mehrkomponentensystem beschrieben, bei dem vier Bindemitteltypen miteinander vermischt und dann appliziert werden. Bei den Komponenten handelt es sich um hydroxylgruppenhaltiges Acrylat, Säureanhydrid, wobei mindestens 50 % Alkylhexahydrophthalsäureanhydride sind, Epoxidharz und Melaminharz. Die Systeme weisen einen hohen Festkörpergehalt auf.

In der DE-A-23 33 384 wird ein Bindemittel auf der Basis acrylierter Polyester beschrieben, die durch Polymerisation eines hydroxylgruppenhaltigen Acrylates in einem hydroxylgruppenhaltigen Polyester oder Alkydharz erhalten werden. Die Vernetzung kann mit Melaminharzen und gleichzeitig Epoxidharzen durchgeführt werden.

Die bekannten Überzugsmittel führen teilweise zu Filmen mit hoher Härte und guter Wetterbeständigkeit. Jedoch genügen sie den ständig steigenden Anforderungen an hohe Säurebeständigkeit und Lösemittelresistenz nicht. Desweiteren erfüllen sie nicht die Forderung nach einem sehr hohen Verarbeitungsfestkörper.

In "Hans Kittel, Lehrbuch der Lacke und Beschichtungen", Band I, Teil 1, Grundlagen, Bindemittel (1971), Seiten 435 bis 439, werden Epoxyalkydharze beschrieben, die durch Umsetzung eines Alkydharzes mit Epoxyharz hergestellt werden können; es können auch Kombinationen von Alkydharzen mit Epoxyharzen eingesetzt werden. Die Epoxyharze weisen mehrere Epoxidgruppen und Hydroxlygruppen auf. In der US-A-4,555,535 werden Bindemittelsysteme beschrieben, die durch Veresterung von sauren Acrylatharzen mit Monoepoxiden erhalten werden. Die FR-A-2,198,969 beschreibt die Herstellung von modifizierten Alkydharzen. Es wird ein säurehaltiges Alkydharz verestert; vor der Veresterung werden 90% der vorhandenen Carboxylgruppen mit einem Monoepoxid abgesättigt.

Aufgabe der Erfindung ist die Bereitstellung von Überzugsmitteln mit hohem Verarbeitungsfestkorper. die für Überzüge mit hoher Härte und verbesserter Wetterbeständigkeit, Säurebeständigkeit und Lösemittelresistenz geeignet sind.

Es hat sich gezeigt, daß diese Aufgabe gelöst werden kann durch eine Bindemittelzusammensetzung, die einen Gegenstand der Erfindung darstellt und die enthält:
A) 30 bis 80 Gew.-% eines oder mehrerer carboxyfunktioneller Polymerer, deren Carboxyfunktionalität jeweils einer Säurezahl von 15 bis 300 mg KOH/g entspricht,
B) 3 bis 30 Gew.-% eines oder mehrerer Monoepoxide mit einem mittleren Molekulargewicht von über 150 bis 3000,
C) 0 bis 60 Gew.-% eines oder mehrerer Polyole mit mindestens zwei Hydroxylfunktionen im Molekül, die von einer gegebenenfalls Hydroxyfunktionen aufweisenden Komponente A) verschieden sind,
D) 0 bis 40 Gew.-% mit Hydroxylgruppen unter Etherbildung vernetzenden Komponenten und/oder eines Vernetzers auf Triazinbasis,
E) 0 bis 40 Ge.w-% eines oder mehrerer Polyisocyanate, die gegebenenfalls verkappt sein können,
F) 0 bis 60 Gew.-% einer Anhydridkomponente, bestehend aus mindestens einem organischen Polyanhydrid mit mindestens zwei cyclischen Carbonsäureanhydridgruppen pro Molekül,
G) 0 bis 10 Gew.-% eines oder mehrerer Katalysatoren zur Katalyse der Reaktion von Carboxyl- und Epoxidgruppen,
wobei sich die Summe der Gew.-% der Komponenten A) bis G) auf 100 Gew.-% addiert und wobei wenigstens 10 Gew.-% der Bindemittelzusammensetzung aus einer oder mehreren der Komponenten D), E) und/oder F) besteht.

Die Erfindung betrifft auch Überzugsmittel, die aus den erfindungsgemäßen Bindemittelzusammensetzungen hergestellt werden können. Es kann sich dabei um wäßrige und/oder lösemittelhaltige Überzugsmittel handeln. die gegebenenfalls Pigmente. Füllstoffe und/oder lackübliche Hilfs- und Zusatzstoffe enthalten können: sie können auch als lösemittel- und wasserfreie Pulverlacke formuliert sein.

Als carpoxyfunktionelles Polymeres A) können verschiedene Verbindungen eingesetzt werden. Es handelt sich dabei um die üblichen in Lacken einsetzbaren Harze mit Carboxylgruppen. Beispielsweise ist es möglich carboxyfunktionelle und gegebenenfalls Hydroxylgruppen und gegeberenfalls Urethangruppen enthaltende (Meth)acrylcopolymere. Polyester, Polyester(meth)acrylcopolymere oder Gemische daraus zu verwencen. Geeignet sind beispielsweise carboxyfunktionelle und gegebenenfalls Urethangruppen enthaltende Poly(meth)acrylpolyole. Polyesterpolyole, Polyester(meth)acrylpolyole, Polyurethanpolyole oder Gemische davon.

Bei der Herstellung von als Komponente A) einsetzbaren carboxylgruppenhaltigen (Meth)acrylcopolymeren oder Polyester(meth)acrylcopolymeren, die gegebenenfalls jeweils Urethangruppen enthalten, können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkylestern der Acrylsäure und/oder Methacrylsäure mit Carbonsaureanhydriden. wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen (Meth)acrylcopolymeren oder Polyester(meth)acrylcopolymeren ist es aber auch möglich. zunächst ein Hydroxylgruppen und gegebenenfalls auch schon Carboxylgruppen enthaltendes Polymer mit einer OH-Zahl von 15 bis 300 mg KOH/g aufzubauen und die Carboxylgruppen ganz oder teilweise in einer zweiten Stufe durch Umsetzen mit Carbonsäureanhydriden einzuführen. Bei dieser Arbeitsweise kann mit solchen Mengenverhältnissen gearbeitet werden. daß gegebenenfalls genügend OH-Gruppen übrig bleiben, um eine Urethanisierung durchführen zu können oder um eine Vernetzung mit den Komponenten D) bis F) zu ermöglichen.

Für die Addition an die hydroxylgruppenhaltigen Polymeren, die auch bereits Carboxylgruppen enthalten können, geeignete Carbonsäureanhydride sind die Anhydride von aliphatischen. cycloaliphatischen und aromatischen gesättigten und/oder ungesättigten Di- und Polycarbonsäuren, wie beispielsweise die Anhydride der Phthalsäure. Tetrahydrophthalsäure, Hexahydrophthalsäure, Bernsteinsäure. Maleinsäure. Itaconsäure, Glutarsäure, Trimellithsäure und Pyromellithsäure sowie deren halogenierte oder alkylierte Derivate.

Bevorzugt eingesetzt werden Anhydride der Phthalsäure. Tetrahydro- und Hexahydrophthalsäure sowie 5-Methylhexahydrophthalsäureanhydrid.

Zur Einführung von Hydroxylgruppen in die gegebenenfalls urethangruppenhaltigen (Meth)acrylcopolymeren oder Polyester(meth)acrylcopolymeren geeignete Monomere sind beispielsweise Hydroxylalkylester alpha,beta-ungesättigter Carbonsäuren, wie (Meth)acrylsäure, z.B. mit primären Hydroxylgruppen, wie beispielsweise Hydroxyethylacrylat. Hydroxypropylacrylat, Hydroxybutylacrylat. Hydroxyamylacrylat, Hydroxyhexylacrylat. Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat. 3-Hydroxybutylacrylat und die entsprechenden Methacrylate genannt. Diese Hydroxyalkylester sind beispielsweise auch zur Herstellung der zum Aufbau der Komponente A) beschriebenen Addukte mit Carbonsäureanhydriden geeignet.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Mol epsilon-Caprolacton sein.

Als hydroxyfunktionalisierte Komponente kann zumindest teilweise auch ein Umsetzungsprodukt aus Acrylsäure und/oder Methacrylsäure mit dem Glycidylester einer Carbonsäure mit einem tertiären alpha-Kohlenstoffatom eingesetzt werden. Glycidylester stark verzweigter Monocarbonsäuren sind beispielsweise unter dem Handelsnamen "Cardura" erhältlich. Die Umsetzung der Acrylsäure oder Methacrylsäure mit dem Glycidylester einer Carbonsäure mit einem tertiären alpha-Kohlenstoff kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch, es können die zur Polymerisation üblichen olefinischen Monomeren mit oder ohne weitere funktionelle Gruppen eingesetzt werden. Die Monomeren werden in dem Fachmann geläufiger Weise bevorzugt so ausgewählt, daß ihr Einbau nicht zu unerwünschten Eigenschaften des Copolymerisats führt.

Als weitere ethylenisch ungesättigte Monomere geeignet sind beispielsweise insbesondere Alkylester der Acryl- und Methacrylsäure, wie z.B. Hethyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Ebenso möglich ist die Verwendung von silanmodifizierten Monomeren, wie z.B. gamma-Methacryloxypropyltrimethoxysilan oder gamma-Methacryloxpropyl-tris(2-methoxy-ethoxy)-silan.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind Styrol, Vinyltoluol, alpha-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Die Herstellung der copolymeren Bindemittelkomponente A) erfolgt durch radikalische Copolymerisation. Die Monomermenge wird dabei so abgestimmt, daß die gewünschten Spezifikationen bezüglich Molmasse, OH-Zahl und Säurezahl erzielt werden. Dabei kann es sich als vorteilhaft erweisen, einen Teil der Monomeren zeitversetzt zueinander zuzudosieren. Das Zahlenmittel des Molekulargewichts (Mn) liegt beispielsweise bei 1000 bis 20000. was beispielsweise auch für entsprechende urethanisierte Produkte gilt.

Zur Herstellung der Copolymeren können die Monomeren oder das eingesetzte Monomerengemisch Initiatoren enthalten. Sofern Initiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum. z.B. während mehrerer Stunden nachpolymerisiert werden. Es ist dann möglich, mit einem üblichen Lacklösemittel auf einen gewünschten Feststoffgehalt. beispielsweise in der Größenordnung von 30 bis 60 Gew.-%, beispielsweise 50 Gew-% einzustellen.

Die Herstellung erfolgt beispielsweise als radikalische Lösungspolymerisation in Anwesenheit eines Radikalinitiators, wie sie dem Fachmann geläufig ist. Beispiele für Radikalinitiatoren sind Dialkylperoxide. Diacylperoxide. Hydroperoxide. Perester. Peroxiddicarbonate. Perketale und Azoverbindungen sowie C-C-spaltende Initiatoren.

Die Polymerisationsinitiatoren werden im allgemeinen beispielsweise in einer Menge von 0.1 bis 4 Gew.-%. bezogen auf die Monomeren-Einwaage, zugesetzt.

Zur möglichen Urethanisierung der carboxyfunktionalisierten (Meth)acrylcopolymeren können in einem weiteren Reaktionsschritt OH-Funktionen der carboxylfunktionalisierten (Meth)acrylcopolymeren mit Mono-, Di-, Tri- oder Polyisocyanaten umgesetzt werden. Die Menge der Di-, Tri-, oder Polyisocyanate ist abhängig von der OH-Zahl des (Meth)acrylcopolymeren und wird in dem Fachmann geläufiger Weise so gewählt, daß ein Gelieren vermieden wird. Beispielsweise werden Copolymere mit einer OH-Zahl von 30 bis 100 mg KOH/g mit Di-, Tri- oder Polyisocyanaten derart umgesetzt, daß eine OH-Zahl des urethanisierten Copolymeren von 15 bis 80 mg KOH/g resultiert. Hierbei kann so vorgegangen werden, daß das carboxyl- und OH-funktionelle (Meth)acrycopolymere in einem aprotischen Lösemittel gelöst vorgelegt wird und anschließend das Di-, Tri- oder Poly-isocyanat, gegebenenfalls in einem aprotischen Lösemittel wie z.B. Xylol oder Butylacetat gelöst, in einem Zeitraum von z.B. 30 Minuten bis 3 Stunden beispielsweise bei 5°C bis 80°C zudosiert wird. Das Ende der Reaktion ist erreicht, wenn die NCO-Zahl des Reaktionsgemisches kleiner 0,1 ist. Im Falle der Verwendung von Monoisocyanaten ist keine bestimmte Menge an Isocyanat notwendig, hier können gegebenenfalls alle OH-Funktionen des (Meth)acrylcopolymeren umgesetzt werden. Die Reaktionsbedingungen sind die gleichen wie bei Di-, Tri- oder Polyisocyanaten. Natürlich ist es ebenfalls möglich, OH-funktionelle (Meth)acrylcopolymere vor der Einführung von Carboxylgruppen durch Umsetzung mit Säureanhydriden zu urethanisieren und erst anschließend die Säure anzulagern. Beispiele für Di-, Tri- und Polyisocyanate, die auch im Gemisch eingesetzt werden können, sind unter der Beschreibung der Komponente E) beschrieben.

Beispiele für Monoisocyanate sind z.B. Umsetzungsprodukte der später für die Komponente E) beschriebenen Diisocyanate mit Monoalkoholen wie Methanol, Butanol, Hexanol oder Octanol, wobei 1 mol Diisocyanat mit 1 mol Alkohol umgesetzt wird. Weitere Beispiele für Monoisocyanate sind alpha,alpha-Dimethyl-m-isopropenylbenzylisocyanat oder Isocyanatoacrylat.

Die als Komponente A) einsetzbaren carboxylgruppenhaltigen und gegebenenfalls urethangruppenhaltigen Polyester können nach üblichen Methoden aufgebaut werden aus aliphatischen und/oder cycloaliphatischen Di- Tri- oder höherwertigen Alkoholen. gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole. wie Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Trimethylolpropan, Pentaerythrit, sowie Veretherungsprodukte von Diolen und Polyolen, z.B. Di- und Triethylenglykol Polyethylenglykol, Neopentylglykolester von Hydroxypivalinsäure.

Beispiele für geeignete Carbonsäuren sind Adipin-, Azelain-, 1,2- und 1.3- und 1,4-Cyclohexandicarbonsäure, Tetrahydrophthal-, Hexahydrophthal-, Endomethyltetrahydrophthalsäure. Isophthalsäure. o-Phthalsaure, Terephthalsäure bzw. deren Anhydride sowie deren veresterungsfähige Derivate.

Die errechneten Molgewichte der Polyester liegen bevorzugt zwischen 500 und 5000 g/mol.

Das als Komponente A) verwendbare carboxyfunktionelle Polymer weist bevorzugt eine Glasübergangstemperatur von beispielsweise -20 bis 50°C. bevorzugt von 0 bis 35°C, besonders bevorzugt von 5 bis 25°C auf.

Die als Komponente A) verwendbaren carboxyfunktionellen Polymeren. insbesondere die dafür einsetzbaren (Meth)acrylcopolymerisate und Polyester können zumindest teilweise mit einem Lacton umgesetzt bzw. die "kettenverlängert" sein. Dabei bezieht sich der Ausdruck "kettenverlängert" auf die Stellung der Carboxylgruppe, die sich nicht mehr direkt dem Polymer- oder Polyestergerüst befindet, sondern mit diesem über eine aus dem Lacton stammende Kette verknüpft ist. Unter einer teilweisen Umsetzung wird bevorzugt eine Umsetzung verstanden. bei der wenigstens 10 % der Carboxygruppen mit Lacton umgesetzt wird. Die Lactone (cyklische Ester) lagern sich an Carboxylgruppen an, wobei der Ring geöffnet wird und eine neue endständige Carboxylgruppe entsteht. Da bei Anwesenheit von OH- und COOH-Gruppen die OH-Gruppen wesentlich schneller mit Lactonen reagieren. sind zur Herstellung der Komponente A) carboxyfunktionelle (Meth)acrylcopolymerisate und carboxyfunktionelle Polyester bevorzugt, die frei von OH-Gruppen sind. Wird zunächst von OH-Gruppen enthaltenden Copolymerisaten bzw. Polyestern ausgegangen, so werden deren OH-Gruppen bevorzugt ganz oder weitgehend mit Anhydriden zu Carbonsäuren umgesetzt. Ein Beispiel für ein besonders bevorzugtes Lacton ist das epsilon-Caprolacton.

Die Umsetzung mit dem Lacton kann beispielsweise unmittelbar im Anschluß an die Harzsynthese. d.h. an die Synthese des (Meth)acrylcopolymerisats oder des Polyesters erfolgen. Die Reaktion erfolgt beispielsweise bei erhöhter Temperatur. beispielsweise bei Temperaturen bis zu 100°C. Die Reaktion kann beispielsweise unter Rühren beispielsweise bis zu 10 Stunden durchgeführt werden.

Ebenso wie die bereits beschriebenen carboxylfunktionalisierten (Meth)acrylcopolymeren können die carboxylfunktionalisierten Polyester urethanisiert werden. Die Reaktionsbedingungen und die verwendbaren Polyisocyanate sind die gleichen wie bei den (Meth)acrylcopolymeren. Möglich ist die Einführung der Urethangruppen durch 1. Umsetzung der carboxyl- und OH-funktionellen Polyester, 2. Umsetzung der lactonmodifizierten carboxylfunktionellen und OH-funktionellen Polyester mit Mono-. Di- oder Tri- oder Polyisocyanaten. Bevorzugt ist die Umsetzung von carboxyl- und OH-funktionellen Polyestern vor der Lactonisierung mit Polyisocyanaten. Hierbei ist es möglich, einen großen Teil oder die Gesamtmenge der OH-Gruppen zu urethanisieren, so daß diese OH-Gruppen im Falle der Lactonumsetzung nicht mehr in Konkurrenzreaktionen zu Carboxylgruppen eingehen können.

Ebenfalls möglich ist es, die Urethangruppen bei der Synthese der Polyester selbst einzuführen. Dies geschieht, indem Di- oder Tricarbonsäuren ganz oder teilweise gegen Di- oder Triisocyanate ausgetauscht werden.

Die oben genannten Wege 1) und 2) sind bevorzugt, besonders bevorzugt ist Weg 1). Beispiele für einsetzbare Mono-, Di-, Tri- oder Polyisocyanate werden bei der späteren Beschreibung der Komponente E) genannt.

Die erfindungsgemäße Bindemittelzusammensetzung bzw. die erfindungsgemäßen Überzugsmittel können ein oder mehrere Polyole mit mindestens zwei Hydroxylfunktionen im Molekül als Komponente C) enthalten. wobei es sich um von einer gegebenenfalls Hydroxyfunktionen aufweisenden Komponente A) verschiedene Komponenten C) handelt. Bevorzugt handelt es sich um polymere Polyole, die auch Carboxylgruppen tragen können, wenn A) keine Hydroxylgruppen trägt. Die Polmerpolyole können beispielsweise ausgewählt werden aus den in der Beschreibung für die Herstellung von A) genannten hydroxyfunktionellen Polyesterpolyolen und Poly(meth)acrylpolyolen. Auch die Komponente C) kann wie vorstehend beschrieben urethanisiert werden.
Ebenfalls möglich ist es. das Bindemittel A) im Schoße des Bindemittels C) bzw. umgekehrt zu synthetisieren.

Hierzu ist es beispielsweise möglich einen Teil oder das gesamte Polyol der Komponente C) gegebenenfalls mit einem oder mehreren organischen Lösemitteln vorzulegen und darin die zur Herstellung der carboxyfunktionellen Komponente A) benötigten Monomeren oder einen Teil davon, umzusetzen. Beispielsweise können die Polyole C), gegebenenfalls mit Lösemittel, vorgelegt und erwärmt werden, beispielsweise auf Temperaturen in der Größenordnung von 140°C. Die zur Herstellung der carboxyfunktionellen Komponente A) benötigten Monomeren können. gegebenenfalls zusammen mit Initiatoren. zudosiert werden, beispielsweise während eines Zeitraum von bis zu 5 Stunden. Bei dieser Verfahrensweise wird als Polyol-Komponente C) bevorzugt ein Polyesterpolyol verwendet werden. insbesondere ein solches mit einem Zahlenmittel des Molekulargewichts Mn von 500 bis 5000, bevorzugt mit einer Säurezahl unter 15 mg KOH/g und bevorzugt mit einer OH-Zahl von 15 bis 300 mg KOH/g. Ein derartiges Schoßpolymerisat aus A) und C) kann gegenüber einer Mischung aus A) und C) Vorteile besitzen, wie beispielsweise eine bessere Verträglichkeit und eine homogenere Vermischung.

Die erfindungsgemäße Bindemittelzusammensetzung bzw. die erfindungsgemäßen Überzugsmittel können als Komponente D) einen mit Hydroxylgruppen unter Etherbildung reagierenden Vernetzer enthalten. Es handelt sich dabei beispielsweise um ein oder mehrere Melaminharze. Beispiele hierfür sind in Wasser unlösliche butanol- oder isobutanolveretherte Melamine wie z.B. die Handelsprodukte Setamin ^{R} US 138 oder Maprenal ^{R} MF 610; mischveretherte Melamine. die sowohl butanol- als auch methanolverethert sind, wie z.B. Cymel ^{R} 254. sowie Hexamethyloxymethylmelamin (HMM-Melamine) wie z.B. Cymel ^{R} 301 oder Cymel ^{R} 303. wobei letzteren zur Vernetzung gegebenenfalls ein Säurekatalysator wie z.B. p-Toluolsulfonsäure zugesetzt werden kann.

Weitere Beispiele für Melaminharzvernetzer sind übliche hydrophile und damit wasserlösliche bzw. -verträgliche Melaminharze, wie z.B. methylveretherte Melamine wie z.B. Cymel ^{R} 325, Cymel ^{R} 327, Cymel ^{R} 350 und Cymel ^{R} 370, Maprenal ^{R} MF 927.

Die erfindungsgemäßen Bindemittelzusammensetzungen und Überzugsmittel können als Vernetzerkomponente D) auch einen Vernetzer auf Triazinbasis enthalten. Ein Beispiel dafür ist ein Triazin-Triscarbamat der allgemeinen Formel

C₃N₃(NHCOOR)₃

Hierbei kann R ein Alkylrest mit 1 bis 20 C-Atomen. ein Arylrest mit 6 bis 20 C-Atomen und/oder ein Aralkylrest mit 7 bis 20 C-Atomen sein. Die Reste R können gleich oder verschieden sein.

Spezielle Beispiele für diese Carbamatvernetzer sind 2,4,6-Tris-(methoxycarbonylamino)-1.35-triazin und 2,4,6-Tris-(butoxycarbonylamino)-1,3,5-triazin.

Die erfindungsgemäßen Überzugsmittel können als mit OH-Gruppen Urethangruppen bildende Vernetzer (Komponente E) ein oder mehrere freie oder verkappte Polyisocyanate enthalten. Beispiele für einsetzbare Polyisocyanate sind cycloaliphatische. aliphatische oder aromatische Polyisocyanate wie Tetramethylendiisocyanat. Hexamethylendiisocyanat, 2,2,4-Trimethylendiisocyanat. 1,12-Dodecandiisocyanat, Cyclohexan-1,3-und 1,4-diisocyanat, Isophorondiisocyanat, Perhydro-2,4'- und/oder - 4,4'-diphenylmethandiisocyanat, 1,3- und 1.4-Phenylendiisocyanat, 2,4-und 2,6-Toluylendiisocyanat, Diphenylmethan-2,4'- und/oder -4,4'-diisocyanat. 3,2'- und/oder 3,4-Diisocyanato-4-methyl-diphenylmethan, Naphthylen-1,5-diisocyanat, Triphenylmethan-4,4',4''-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-isocyanatohexyl)-biuret oder niedermolekulare. Urethangruppen aufweisende Polyisocyanate, wie sie durch Umsetzung von im Überschuß eingesetzten IPDI mit einfachen mehrwertigen Alkoholen des Molekulargewichtsbereiches 62 - 300. insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyanatgruppen zu gegenüber NCO reaktiven Wasserstoffatomen bevorzugt 1,05 bis 10:1, besonders bevorzugt 1,1 bis 3:1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 bis 10000, vorzugsweise von 800 - 4000 aufweisen.

Die Polyisocyanate können als freie Polyisocyanate eingesetzt werden. In diesem Falle sind sie nicht verkappt. Bei den Bindemitteln handelt es sich dann um sogenannte Zweikomponentensysteme (2K-Systeme), bei denen die Polyisocyanate unmittelbar vor der Anwendung zugesetzt werden. Wenn die Isocyanatgruppierungen der Polyisocyanate vollständig verkappt sind, können die verkappten Polyisocyanate dem Überzugsmittel direkt zugesetzt werden. Die Überzugsmittel sind dann sogenannte Einkomponentensysteme (1K-Systeme).

Als Verkappungsmittel können übliche Verkappungsmittel verwendet werden, wie sie beispielsweise auf dem Lacksektor eingesetzt werden. Beispiele für verwendbare Verkappungsmittel sind Ester, wie Malonsäuredimethylester, Malonsäurediethylester, Acetessigsäureethylester, Lactame, wie epsilon-Caprolactam, Acetanilid, Acetylaceton, Acetonoxim, substituierte Pyrazole, wie Dimethylpyrazol, Propandiol-1.2 und/oder Oxime, wie Butanonoxim.

Werden unverkappte, freie Polyisocyanate in wäßrigen Systemen eingesetzt, so kann es vorteilhaft sein, die Polyisocyanate mit hydrophilen oder hydrophoben Gruppen auszustatten. Durch den Einsatz hydrophiler Polyisocyanate können diese leichter im Wasser dispergiert werden. Durch die Einführung hydrophober Gruppen erfolgt eine raschere Diffusion der hydrophobisierten Polyisocyanate in die Harzteilchen in wäßrigen Systemen.

Die erfindungsgemäße Bindemittelzusammensetzung und damit die erfindungsgemäßen Überzugsmittelzusammensetzungen können eine oder mehrere Anhydridkomponenten F) als mit OH-Gruppen Estergruppen bildende Vernetzer enthalten.

Die Komponente F) besteht aus mindestens einer organischen Verbindung, die mindestens zwei cyclische Carbonsäureanhydridgruppen pro Molekül aufweist. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Addukte der allgemeinen Formel (I) 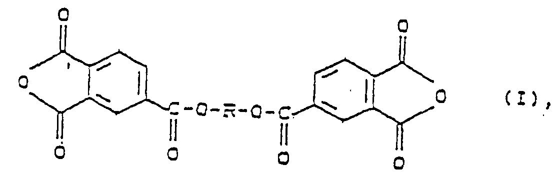 wobei R für einen zweiwertigen, gegebenenfalls Ethersauerstoffatome aufweisenden Kohlenwasserstoffrest mit 2 bis 12 Kohlenstoffatomen steht. In Betracht kommende Verbindungen der Formel (I) sind beispielsweise die entsprechenden Trimellithsäureanhydrid-Ester von Ethylenglykol, Propylenglykol, Diethylenglykol, Triethylenglykol, Neopentylglykol, Glycerin oder Trimethylolpropan.

Weitere geeignete Polyanhydride sind beispielsweise Benzophenontetracarbonsäuredianhydride der allgemeinen Formel (II) 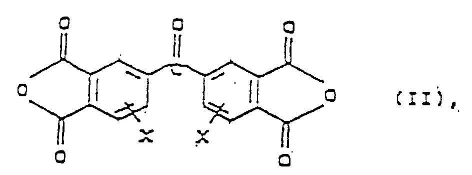 wobei X für Wasserstoff oder Halogen, NO₂, -COOH oder -SO₃H Substituenten steht und bei beiden aromatischen Kernen gleich oder verschieden sein kann. Beispiele dafür sind 3,3',4,4'-Benzophenontetracarbonsäuredianhydrid; 2-Brom-3,3',4,4'-benzophenontetracarbonsäuredianhydrid oder 5-Nitro-3,3',4,4'-benzophenontetracarbonsäuredianhydrid.

Weiterhin geeignet ist beispielsweise auch 1,2,4,5-Benzoltetracarbonsäuredianhydrid der Formel (III)

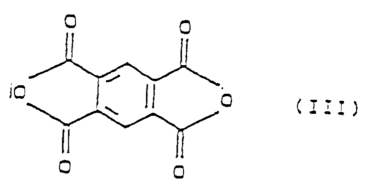

Besonders bevorzugt besteht die Komponente F) aus Copolymerisaten von olefinisch ungesättigten Monomeren, die pro Molekül im statistischen Mittel mindestens 2 cyclische Carbonsäureanhydridgruppen aufweisen. Bevorzugt handelt es sich hierbei um Copolymerisate von Maleinsäureanhydrid und/oder Itaconsäureanhydrid mit Comonomeren wie sie beispielsweise bei der Komponenten A) als Monomere zum Einsatz kommen und bereits oben beispielhaft offenbart sind. Besonders gut geeignet sind Copolymerisate, basierend auf Maleinsäureanhydrid, Styrol und/oder Alkylestern der Acryl- und/oder Methacrylsäure. Die Copolymerisate weisen vorzugsweise ein Zahlenmittel des Molgewichts (Mn) von 1500 bis 75000, vorzugsweise 2000 bis 50000 auf.

Ihre Herstellung kann z.B. in völliger Analogie zu der Herstellung der Copolymerisate A) erfolgen.

Die erfindungsgemäße Bindemittelzusammensetzung besteht zu wenigstens 10 Gew.-% aus einer oder mehreren der Komponenten D), E) und/oder F).

Die erfindungsgemäße Bindemittelzusammensetzung und damit die erfindungsgemäßen Überzugsmittelzusammensetzungen enthalten eine oder mehrere Monoepoxidverbindungen B). Dabei handelt es sich um unter den Einbrennbedingungen im wesentlichen nicht flüchtige Substanzen, beispielsweise beträgt der flüchtige Anteil bevorzugt unter 1 Gew.-%, bezogen auf die Gesamtmenge an Monoepoxid B) in der Bindemittelzusammensetzung. Die Molmassen der Monoepoxide B) liegen über 150 bis zu einem mittleren Molekulargewicht von 3000, besonders bevorzugt von kleiner 1000. Durch diese niedrigen Molekulargewichte können diese Verbindungen das Viskositätsverhalten der hiermit erstellten Überzugsmittel sehr positiv beeinflussen, da sie dann sozusagen als Reaktivverdünner fungieren.

Beispiele für derartige Verbindungen sind z.B. Umsetzungsprodukte aus einem Mol einer Diglycidylverbindung, z.B. eines Diglycidylethers, wie Bisphenol-A-diglycidylether und einem Mol einer gesättigten oder ungesättigten Monocarbonsäure wie Essigsäure, Propionsäure oder Isononansäure. Weitere Beispiele sind Umsetzungsprodukte aus Hydroxyalkylepoxiden. wie 1-Hydroxy-2.3-epoxypropan mit aromatischen Polycarbonsäuren, wie Phthal- oder Terephthalsäure zu den entsprechenden Monoepoxyestern. Weitere Beispiele sind Umsetzungsprodukte von Di- oder Polyepoxiden wie z.B. Polyglycidylether auf der Basis von Diethylenglykol, Dipropylenglykol, Polypropylenglykol mit einem Zahlenmittel des Molgewichts von bis zu 2000 und Trigtycidylether von Glycerin und/oder Polyphenolen wie Bisphenol A oder F mit den genannten Monocarbonsäuren.

Bevorzugt werden als Komponente B) Glycidylester von gesättigten C5-C10-Monocarbonsäuren mit tertiären Carboxylgruppen oder Mischungen davon eingesetzt. Diese Monocarbonsäuren sind unter dem Namen Versatic-Säuren als Handelsprodukt der Shell AG erhältlich. Besonders bevorzugt ist der Glycidylester der Versaticsäure mit dem Handelsproduktnamen Cardura E der Shell AG.

Die erfindungsemäße Bindemittelzusammensetzung und damit die erfindungsgemäßen Überzugsmittelzusammensetzungen können einen oder mehrere Katalysatoren (Komponente G) für die Umsetzung von Carboxylgruppen mit Epoxidgruppen enthalten. Es handelt sich insbesondere um in organischen Lösemitteln oder in Wasser lösliche oder mit organischen Materialien mischbare Katalysatoren. Beispiele für geeignete in organischen Lösemitteln oder mit organischen Materialien mischbare Katalysatoren sind Phosphoniumsalze, wie beispielsweise Ethyltriphenylphosphoniumacetat, -phosphat, -chlorid. -bromid, -jodid. Butyltriphenylphosphoniumacetat, -phosphat, -chlorid, -bromid, -jodid. Benzyltriphenylphosphoniumacetat, -phosphat, -chlorid, -bromid. -jodid und die quaternären Ammoniumsalze, wie beispielsweise Alkylbenzyldimethylammoniumchlorid, Benzyltrimethylammoniumchlorid. Methyltrioctylammoniumchlorid. Tetraethylammoniumbromid. N-Dodecylpyridiniumchlorid und Tetraethylammoniumiodid.

Weitere Katalysatorbeispiele sind Säuren, wie Sulfonsäuren, z.B. p-Toluolsulfonsäure. Es ist auch möglich Epoxidverbindungen mit p-Toluolsulfonsäure umzusetzen, beispielsweise bei erhöhter Temperatur, bis zu beispielsweise 80°C. Hierbei wird die p-Toluolsulfonsäure unter Oxiran-Öffnung angelagert. Beim Einbrennen des fertigen Lackes wird die p-Toluolsulfonsäure zurückgespalten und kann die Reaktion COOH/Epoxid unter Ausbildung von Hydroxylfunktionen katalysieren, wobei letztere dann mit den Vernetzergruppen reagieren können. Weitere Beispiele sind Dinonylnaphthalindisulfonsäure, Dinonylnaphthalinmonosulfonsäure und Dodecylbenzolsulfonsäure. Die Säurekatalysatoren können teilweise, ganz oder überneutralisiert werden. Mögliche Neutralisationsmittel sind tertiäre Amine, wie z.B. Triethylamin, Dimethylethanolamin oder Dimethyloxazolidin.

Der in organischen Lösemitteln und/oder Wasser lösliche oder mit organischen Materialien mischbare Katalysator kann in einer Menge von etwa 0 bis etwa 10 Gew.-%. vorzugsweise von 0,3 bis 2,0 Gew.-%, bezogen auf die Summe der Gewichte der Komponenten A) bis F) enthalten sein.

Ebenfalls ist es möglich, einen Aminkatalysator mit dem COOH-funktionalisierten (Meth)acrylcopolymerharzgemisch zu verknüpfen. Dies geschieht zweckmäßigerweise durch Copolymerisation von tert.-Amino(meth)acryl(amid)monomeren bei der Synthese des COOH-funktionalisierten (Meth)acrylcopolymerharzes.

Beispiele für solche Monomere sind Dimethylaminoethyl(meth)acrylat, Diethylaminopropyl(meth)acrylat und Dimethylaminopropyl(meth)acrylamid. Der mengenmäßige Anteil dieser (Meth)acrylate liegt vorzugsweise bei 0,5 bis 10 Gew.-%, besonders bevorzugt bei 1 bis 5 Gew.-%, bezogen auf den Gesamtfeststoffgehalt des COOH-funktionalisierten (Meth)acrylcopolymerharzes.

Bei der Bereitung der erfindungsgemäßen Bindemittelzusammensetzung bzw. Überzugsmittelzusammensetzung werden die Mengenverhältnisse bevorzugt so gewählt, daß zwischen dem carboxylgruppenhaltigen Harz der Komponente A) und der Monoepoxidkomponente B) ein molares Verhältnis der Carboxylgruppen zu Epoxidgruppen von 3:1 bis 1:1 vorliegt und daß bevorzugt zwischen der Summe der Gewichte der Komponenten A) bis C) und dem Gewicht der Komponente D), insbesondere bei einem Melaminharz als der Komponente D), ein Verhältnis von 65:35 bis 98:2 oder zwischen der Summe der Gewichte der Komponenten A) bis C) und dem Gewicht der Polyisocyanatkomponenten E) ein Verhältnis von 60:40 bis 95:5 herrscht.

Durch die während des Einbrennens stattfindende Reaktion der Epoxidgruppen von B) mit den Carboxylgruppen von A) werden Hydroxylgruppen gebildet. Diese ergeben mit den gegebenenfalls in A) enthaltenen Hydroxylgruppen zusammen die Hydroxylzahl von A) im Bereich von 80 - 250, bevorzugt 100 - 200, besonders bevorzugt 110 - 160 mg KOH/g.

Die erfindungsgemäßen Bindemittelzusammensetzungen können zur Herstellung von Überzugsmitteln eingesetzt werden. Sie können Lösemittel enthalten, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden.

Beispiele für derartige Lösemittel sind organische Lösemittel. insbesondere lackübliche Lösemittel, wie aliphatische und aromatische Kohlenwasserstoffe, beispielsweise Toluol, Xylol, Gemische aliphatischer und/oder aromatischer Kohlenwasserstoffe. Ester, Ether und Alkohole. Zur Herstellung der Überzugsmittel aus den erfindungsgemäßen Bindemitteln können auch wäßrige Lösungen bereitet werden. Hierzu können gegebenenfalls geeignete Emulgatoren verwendet werden. wie sie auf dem Lacksektor üblich sind.

Die erfindungsgemäßen Bindemittelzusammensetzungen. sowie die erfindungsgemäßen Überzugsmittel können auch in wäßriger Form vorliegen, wobei sie frei von organischen Lösemitteln sind oder nur einen geringeren Anteil an organischen Lösemitteln aufweisen. Zur Herstellung wäßriger Zusammensetzungen ist es beispielsweise möglich, die carboxylhaltige Komponente A) weitgehend von organischen Lösemitteln zu befreien, z.B. durch Destillation, anschließend einen Teil der Carboxylgruppen zu neutralisieren, z.B. mit Basen wie Triethylamin oder Dimethylethanolamin und dann in Wasser. das gegebenenfalls erwärmt ist. zu emulgieren. In diese Emulsion, in der die Komponente A) als Emulgatorharz wirkt, können dann gegebenenfalls die anderen Harze einemulgiert werden. Dies geschieht z.B. dadurch. daß das Emulgatorharz auf 60 - 80°C erwärmt und die ebenfalls auf 60 - 80°C erwärmten weiteren Harze in 5 - 120 Minuten unter Rühren zugefügt werden. Die Zugabe aller anderen Harze sowie Lackadditive kann auch vor der Emulgierung erfolgen.

Ebenfalls möglich ist es beispielsweise auch, das weitgehend oder vollständig von Lösemitteln befreite COOH-funktionalisierte Harz der Komponente A) mit der weitgehend oder vollständig vom Lösemittel befreiten Epoxidkomponente B) zu mischen und in einem Wasser/Emulgator-Gemisch mittels einer Rotor/Stator-Anlage zu emulgieren. Ebenso ist es beispielsweise möglich, die Komponenten getrennt zu emulgieren und die Emulsion zu mischen. Mögliche Emulgatoren sind z.B. ethoxylierte Sorbitanfettsäureester.

Zur Herstellung der erfindungsgemäßen Überzugsmittel können Pigmente, Füllstoffe und/oder lackübliche Hilfs- und Zusatzstoffe zugesetzt werden. Es handelt sich dabei um lackübliche Additive, wie sie auf dem Lacksektor geläufig sind.

Die Mengen liegen im üblichen. dem Fachmann geläufigen Bereich.

Beispiele für solche Additive sind Pigmente, beispielsweise farbgebende Pigmente wie Titandioxid oder Ruß und Effektpigmente wie Metallschuppenpigmente und/oder Perlglanzpigmente. Die erfindungsgemäß bereitgestellten Bindemittelzusammensetzungen eignen sich auch für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z.B. Talkum und Silikate, sowie Hilfs- und Zusatzstoffe wie Weichmacher, Lichtschutzmittel, Stabilisatoren und Verlaufsmittel, wie Silikonöle. Diese werden ebenfalls in üblichen, dem Fachmann geläufigen Mengen eingesetzt.

Die aus den erfindungsgemäßen Bindemitteln hergestellten Überzugsmittel sind für Überzüge geeignet, die auf einer Vielzahl von Substraten haften. wie beispielsweise Holz. Textilien, Kunststoff, Glas, Keramik und insbesondere Metall.

Die erfindungsgemäßen Überzugsmittel können nach bekannten Verfahren, wie z.B. Spritzen, Tauchen. Rollen oder Rakeln appliziert werden. Dabei wird auf das gegebenenfalls schon mit weiteren Lackschichten versehene Substrat der Überzug aus dem erfindungsgemäßen Überzugsmittel. beispielsweise als Decklacküberzug, aufgetragen. Nach einer Abdunstphase wird das applizierte Überzugsmittel durch Erwärmen vernetzt. Die Einbrenntemperaturen liegen z.B. bei 80 bis 180°C, bevorzugt bei 100 bis 150°C. Die Schichtdicke des eingebrannten Films beträgt beispielsweise 15 bis 60 µm. Dabei entsteht ein vernetzter harter, glänzender sowie säurebeständiger Lacküberzug.

Eine bevorzugte Ausführungsform ist die Applikation des erfindungsgemäßen Überzugsmittels als Klarlacküberzug auf einen Farb- und/oder Effektpigment enthaltenden Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente. wie z.B. Metallic-Pigmente. Als Bindemittelbasis des Basislacks werden bevorzugt Polyester, Polyurethan- oder (Meth)acrylcopolymerharze eingesetzt. Diese Bindemittel können gegebenenfalls über Vernetzer. z.B. Melamin- oder Isocyanatderivate. vernetzt werden.

Es ist möglich, das insbesondere als Klarlack formulierte erfindungsgemäße Überzugsmittel zu erwärmen und heiß zu applizieren. beispielsweise bei 60 bis 100°C. Hierdurch kann das Überzugsmittel mit sehr hohem Verarbeitungsfestkörper appliziert werden. da durch das Erwärmen die Viskosität reduziert wird.

Es ist auch möglich. das erfindungsgemäße Überzugsmittel, insbesondere als Klarlack, mit überkritischem Kohlendioxid als Lacklösemittel zu versetzen und nach dem sogenannten Unicarb-Verfahren zu applizieren.

Die erfindungsgemäßen Überzugsmittel können neben der Formulierung als Klarlacke auch als Basislacke, sowie auch als Füller formuliert werden. Sie eignen sich besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

In einer bevorzugten Ausführungsform werden die die erfindungsgemäßen Bindemittelzusammensetzungen enthaltenden Überzugsmittel in einem Verfahren zur Herstellung einer Mehrschichtlackierung als Basislack und/oder Klarlack verwendet, wobei die Merschichtlackierungen durch Auftrag einer Grundierung und gegebenenfalls einer oder mehrerer weiterer Zwischenschichten auf ein Substrat und anschließenden Auftrag eines Farb- und/oder Effektpigmente enthaltenden Basislacks mit nachfolgender Überlackierung mit einem Klarlack, wobei Basislack und Klarlack naß-in-naß aufgetragen und gemeinsam eingebrannt werden können. hergestellt wird.

Im Vergleich mit üblichen Basislacken ergeben die erfindungsgemäßen Basislacke insbesondere Überzüge mit einer verbesserten Feucht-Warm-Beständigkeit.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

In den folgenden Beispielen beziehen sich Teile (T) und Prozent auf das Gewicht. sofern nicht anders angegeben.

### Beispiel 1:

### Herstellung eines sauren Polyesters

In einem Dreihalskolben. der mit Rührer. Abscheider, Thermometer und Rückflußkühler versehen ist, werden 843,8 T Isononansäure, 845.5 T Hexahydrophthalsäureanhydrid und 808,3 T Pentaerythrit unter Rühren vorgelegt und bei 180°C bis 230°C verestert, bis eine Säurezahl von etwa 30 mg KOH/g erreicht ist. Es wird auf 80°C gekühlt und anschließend portionsweise 1274 T Hexahydrophthalsäureanhydrid zugegeben. Die Temperatur darf während der Zugabe 100°C nicht überschreiten. Nach der Zugabe wird die Temperatur auf 140°C erhöht und 2 Stunden bei dieser Temperatur gerührt. Dann wird der Ansatz auf 80°C gekühlt und mit 895 T n-Butanol verdünnt. Der so erhaltene Polyester hat einen Einbrennrückstand von 79,8 % (1h/150°C) und eine Säurezahl von 155 mg KOH/g Festharz.

### Beispiel 2:

### Herstellung eines COOH-funktionellen Acrylharzes

In einem 4-Halskolben, der mit Rührer. Rückflußkühler, Tropftrichter und Thermometer versehen ist, werden 808 T Butylglykolacetat vorgelegt und unter Rühren auf 145°C erhitzt. Anschließend wird ein Gemisch aus 274 T Acrylsäure, 404 T Styrol, 587 T Butylmethacrylat, 565 T Butylacetat, 11 T Di-tert. -Butylperoxid und 48 T Tert.-Butyl-peroxy-2-ethylhexanoat in einem Zeitraum von 5 Stunden kontinuierlich zudosiert. Dann wird 4 Stunden bei 145°C nachpolymerisiert. Das erhaltene Polymer hat einen Einbrennrückstand von 70.3 % (1h/150°C) und eine Säurezahl von 118 mg KOH/g Festharz.

### Beispiel 3:

### Herstellung von Lacken

445 T des in Beispiel 1) hergestellten Polyesters werden mit 257 T des Glycidylesters der Versaticsäure (Handelsprodukt der Firma Shell - Cardura E), 152 T eines handelsüblichen Hexamethoxymelaminharzes, 3 T eines handelsüblichen Verlaufsmittels auf Silikonbasis und 239 T eines Gemisches aromatischer Kohlenwasserstoffe gemischt. Der so erhaltene Lack hat einen Einbrennrückstand von 69,5 % (1h/125°C). Anschließend wird mit n-Butanol auf Spritzviskosität eingestellt.

Der Lack wird nun auf ein Blech, daß mit einem handelsüblichen Wasserbasislack beschichtet ist. naß in naß lackiert. Hierfür wird zuerst der Basislack in einer Trockenfilmschichtdicke von etwa 15 µm mit einer Spritzpistole aufgespritzt, 5 Minuten abgelüftet und anschließend 10 Minuten bei 80°C vorgetrocknet. Dann wird der erfindungsgemäße Klarlack aus Beispiel 3) mit einer Trockenfilmschichtdicke von etwa 35 µm spritzappliziert und 25 Minuten bei 145°C eingebrannt.

Der erhaltene Lack zeigt einen hervorragenden Decklackstand und eine sehr gute Beständigkeit gegen Chemikalien wie z.B. Säuren.

### Beispiel 4:

### Herstellung von Lacken

500 T des in Beispiel 2) beschriebenen Polyacrylatharzes werden mit 188 T Cardura E 10, 3 T eines handelsüblichen Verlaufsmittels auf Silikonbasis, 152 T eines handelsüblichen Hexamethoxymelaminharzes, 100 T eines Gemisches aromatischer Kohlenwasserstoffe sowie 28 T n-Butanol gemischt. Der so hergestellte Lack hat einen Einbrennrückstand von 70 % (lh/125°C). Er wird mit n-Butanol auf Spritzviskosität eingestellt. Die Lackierung erfolgt naß in naß wie in Beispiel 3) beschrieben, mit dem Unterschied. daß hier der Klarlack aus Beispiel 4) eingesetzt wird. Der erhaltene eingebrannte Lack zeichnet sich ebenfalls durch einen sehr guten Decklackstand und sehr gute Säurebeständigkeit aus.

### Beispiel 5:

### Herstellung von Lacken

Es wird wie in Beispiel 4) vorgegangen mit dem Unterschied, daß hier noch 12 T p-Toluolsulfonsäure als Katalysator zugegeben werden. Auch dieser Lack zeichnet sich nach dem Einbrennen durch sehr guten Decklackstand und gute Säurebeständigkeit aus, jedoch ist der Lackfilm beständiger gegenüber Verkratzung als in den Beispielen 3) und 4).

## Patentansprüche

1. Für Überzugsmittel geeignete Bindemittelzusammensetzung, enthaltend
A) 30 bis 80 Gew.-% eines oder mehrerer carboxyfunktioneller Polymerer, deren Carboxyfunktionalität jeweils einer Säurezahl von 15 bis 300 mg KOH/g entspricht,
B) 3 bis 30 Gew.-% eines oder mehrerer Monoepoxide mit einem mittleren Molekulargewicht von über 150 bis 3000,
C) 0 bis 60 Gew.-% eines oder mehrerer Polyole mit mindestens zwei Hydroxylfunktionen im Molekül, die von einer gegebenenfalls Hydroxyfunktionen aufweisenden Komponente A) verschieden sind,
D) 0 bis 40 Gew.-% mit Hydroxylgruppen unter Etherbildung vernetzenden Komponenten und/oder eines Vernetzers auf Triazinbasis,
E) 0 bis 40 Gew-% eines oder mehrerer Polyisocyanate, die gegebenenfalls verkappt sein können,
F) 0 bis 60 Gew.-% einer Anhydridkomponente, bestehend aus mindestens einem organischen Polyanhydrid mit mindestens zwei cyclischen Carbonsäureanhydridgruppen pro Molekül,
G) 0 bis 10 Gew.-% eines oder mehrerer Katalysatoren zur Katalyse der Reaktion von Carboxyl- und Epoxidgruppen,
wobei sich die Summe der Gew.-% der Komponenten A) bis G) auf 100 Gew.-% addiert und wobei wenigstens 10 Gew.-% der Bindemittelzusammensetzung aus einer oder mehreren der Komponenten D), E) und/oder F) besteht.

2. Bindemittelzusammensetzung nach Anspruch 1, **dadurch gekennzeichnet, daß** zwischen der Summe der Gewichte der Komponenten A) bis C) und dem Gewicht der Komponente D) ein Verhältnis von 65:35 bis 98:2 oder zwischen der Summe der Gewichte der Komponenten A) bis C) und dem Gewicht der Komponente E) ein Verhältnis von 60:40 bis 95:5 herrscht.

3. Bindemittelzusammensetzung nach Anspruch 1 oder 2, **dadurch gekennzeichnet, daß** es als Komponente A) ein oder mehrere carboxyfunktionelle Polymere enthält, deren Carboxygruppen zumindest teilweise mit Lacton umgesetzt sind.

4. Bindemittelzusammensetzung nach Anspruch 1, 2 oder 3, **dadurch gekennzeichnet, daß** die Komponente A) eine Glasübergangstemperatur von -20 bis 50°C, bevorzugt von 0 bis 35°C aufweist.

5. Bindemittelzusammensetzung nach einem der vorhergehenden Ansprüche, **dadurch gekennzeichnet, daß** als Komponente B) Glycidylester von gesättigten C5-C10-Monocarbonsäuren mit tertiären Carboxylgruppen oder Mischungen davon eingesetzt werden.

6. Überzugsmittel **dadurch gekennzeichnet, daß** es eine Bindemittelkombination nach einem der Ansprüche 1 bis 5 enthält.

7. Überzugsmittel nach Anspruch 6, **dadurch gekennzeichnet, daß** ein wäßriges oder ein Lösemittel enthaltendes Überzugsmittel vorliegt.

8. Verfahren zur Herstellung von Mehrschichtlackierungen durch Auftrag einer Grundierung und gegebenenfalls einer oder mehrerer weiterer Zwischenschichten auf ein Substrat und anschließenden Auftrag eines Farb- und/oder Effektpigmente enthaltenden Basislacks mit nachfolgender Überlackierung mit einem Klarlack, wobei Basislack und Klarlack naß-in-naß aufgetragen und gemeinsam eingebrannt werden können, **dadurch gekennzeichnet, daß** als Basislack und/oder Klarlack ein Überzugsmittel gemäß Anspruch 6 oder 7 beziehungsweise ein Bindemittel gemäß den Ansprüchen 1 bis 5 verwendet wird.

## Claims

1. Binder composition suitable for coating compositions and containing
A) 30 to 80 wt.% of one or more carboxy-functional polymers, the carboxy-functionality of which in each case corresponds to an acid value of 15 to 300 mg of KOH/g,
B) 3 to 30 wt.% of one or more monoepoxides having an average molecular weight of above 150 to 3000,
C) 0 to 60 wt.% of one or more polyols having at least two hydroxyl functions per molecule, said polyols differing from a component A) optionally containing hydroxyl functions,
D) 0 to 40 wt.% of components which crosslink with hydroxyl groups to form ethers and/or of a triazine-based crosslinking agent,
E) 0 to 40 wt.% of one or more polyisocyanates, which may optionally be capped,
F) 0 to 60 wt.% of an anhydride component consisting of at least one organic polyanhydride having at least two cyclic carboxylic anhydride groups per molecule,
G) 0 to 10 wt.% of one or more catalysts to catalyse the reaction of carboxyl and epoxide groups,
wherein the sum of weight percentages of components A) to G) adds up to 100 wt.% and wherein at least 10 wt.% of the binder composition consists of one or more of components D), E) and/or F).

2. Binder composition according to claim 1, **characterised in that** there prevails between the sum of weights of components A) to C) and the weight of component D) a ratio of 65:35-98:2 or between the sum of weights of components A) to C) and the weight of component E) a ratio of 60:40-95:5.

3. Binder composition according to claim 1 or 2, **characterised in that** it contains one or more carboxy-functional polymers as component A), the carboxy groups of which are at least partially reacted with lactone.

4. Binder composition according to claim 1, 2 or 3, **characterised in that** component A) exhibits a glass transition temperature of -20 to 50°C, preferably of 0 to 35°C.

5. Binder composition according to one of the preceding claims, **characterised in that** glycidyl esters of saturated C5-C10 monocarboxylic acids with tertiary carboxyl groups or mixtures thereof are used.

6. Coating composition **characterised in that** it contains a binder combination according to one of claims 1 to 5.

7. Coating composition according to claim 6, **characterised in that** an aqueous or solvent-containing coating composition is present.

8. Process for the production of a multilayer lacquer coatings by applying a primer and optionally one or more further intermediate layers onto a substrate and subsequently applying a base lacquer containing colouring and/or effect pigments with subsequent overcoating with a clear lacquer, wherein the base lacquer and clear lacquer may be applied wet-on-wet and stoved together, **characterised in that** a coating composition according to claim 6 or 7 or a binder according to claims 1 to 5 is used as the base lacquer and/or clear lacquer.

## Revendications

1. Composition de liant convenant pour des agents de revêtement, contenant
A) de 30 à 80% en poids d'un ou plusieurs polymères carboxyfonctionnels dont la fonctionnalité carboxy correspond respectivement à un indice d'acide de 15 à 300 mg de KOH/g,
B) de 3 à 30% en poids d'un ou plusieurs monoépoxydes ayant une masse moléculaire moyenne allant de plus de 150 à 3000,
C) de 0 à 60% en poids d'un ou plusieurs polyols dont la molécule contient au moins deux fonctions hydroxyle et qui sont différents d'un composant A) présentant le cas échéant des fonctions hydroxy,
D) de 0 à 40% en poids de composants réticulant avec des groupes hydroxyles avec formation d'éther et/ou d'un agent de réticulation à base de triazine,
E) de 0 à 40% en poids d'un ou plusieurs polyiso- cyanates qui peuvent le cas échéant être coiffés,
F) de 0 à 60% en poids d'un composant anhydride composé d'au moins un polyanhydride organique ayant au moins deux groupes anhydrides carboxyliques cycliques par molécule,
G) de 0 à 10% en poids d'un ou plusieurs catalyseurs servant à catalyser la réaction des groupes carboxyles et époxydes,
la somme des pourcentages en poids des composants A) à G) étant égale à 100% en poids et au moins 10% en poids de la composition de liant étant constitués par un ou plusieurs des composants D), E) et/ou F).

2. Composition de liant selon la revendication 1, **caractérisée en ce qu'**il existe un rapport de 65:35 à 98:2 entre la somme des poids des composants A) à C) et le poids du composant D) ou bien un rapport de 60:40 à 95:5 entre la somme des poids des composants A) à C) et le poids du composant E).

3. Composition de liant selon la revendication 1 ou 2, **caractérisée en ce qu'**elle contient comme composant A) un ou plusieurs polymères carboxyfonctionnels dont les groupes carboxy ont réagi au moins en partie avec de la lactone.

4. Composition de liant selon la revendication 1, la revendication 2 ou 3, **caractérisée en ce que** le composant A) présente une température de transition vitreuse de -20 à 50°C, de préférence de 0 à 35°C.

5. Composition de liant selon l'une des revendications précédentes, **caractérisée en ce que** l'on utilise comme composant B) des esters glycidyliques d'acides monocarboxyliques saturés en C₅ à C₁₀ avec des groupes carboxyles tertiaires, ou bien des mélanges de ceux-ci.

6. Agent de revêtement, **caractérisé en ce qu'**il contient une combinaison de liants selon l'une des revendications 1 à 5.

7. Agent de revêtement selon la revendication 6, **caractérisé en ce qu'**il s'agit d'un agent de revêtement aqueux ou contenant un solvant.

8. Procédé de réalisation de laquages multicouches par dépôt d'une couche d'apprêt et le cas échéant d'une ou plusieurs autres couches intermédiaires sur un substrat, suivi du dépôt d'une laque de base contenant des pigments colorés et/ou des pigments d'effet et ensuite du recouvrement par une laque transparente, la laque de base et la laque transparente pouvant être déposées humide sur humide et cuites ensemble, **caractérisé en ce que** l'on utilise comme laque de base et/ou laque transparente un agent de revêtement selon la revendication 6 ou 7 ou bien un liant selon les revendications 1 à 5.
